# FASCICULE DE BREVET EUROPEEN

(11) **EP 0 612 629 B1**
(45) Date de publication et mention de la délivrance du brevet: **04.06.1997**
(21) Numéro de dépôt: 94500031.3
(22) Date de dépôt: 18.02.1994
(51) Int. Cl.: B60B 27/02, B62M 9/12

(54) **Moyeu pour roues de bicyclette**
Fahrradnocke
Hub for bicycle wheels

(30) Priorité: 23.02.1993 ES 9300352
(43) Date de publication de la demande: 31.08.1994
(73) Titulaire: Guerra Navas, Antonio, E-01007 Vitoria (ES)
(72) Inventeur: Guerra Navas, Antonio, E-01007 Vitoria (ES)
(74) Mandataire: Urizar Barandiaran, Miguel Angel

(56) Documents cités:
- EP-A- 0 284 535
- CH-A- 97 774
- FR-A- 2 684 063
- US-A- 4 170 369

## Description

Cette invention concerne un moyeu destinée aux roues de bicyclettes, faisant partie du chassis ou cadre de la bicyclette. L'invention concerne aussi une bicyclette complète.

Le moyeu des roues de bicyclettes, jusqu'à ce jour, se constitue d'une série de composants faisant partie dans leur totalité de la roue de la bicyclette, y compris les éléments de fixation, de sorte que c'est le seul cadre ou chassis de la bicyclette qui définit les accouplements sur lesquels les roues sont montées.

Dans les publications EP-A-0284535 et FR-A-2.684.063 est descrit un moyeu pour roues d'une bicyclette comprenant un corps tubulaire solidaire du cadre de la bicyclette, à l'axe perpendiculaire à ce même cadre; et comprenant un axe tournant monté en position coaxiale dans le corps tubulaire, ayant capacité de tour libre sans possibilité de déplacement axial par rapport à ce même corps, mais plusieurs elements sont, dans les brevets cités, partie de la roue, comme par example le tambour et ne donnent pas solution à la necessité d'utiliser, comme toujours, un outil pour l'operation de montage et de demontage de la roue.

L'objet de la présente invention est un moyeu pour roues de bicyclettes, faisant partie du cadre meme de la bicyclette, de manière que la roue dispose uniquement des moyens d'accouplement et de fixation au moyeu proprement dit.

Cette conception permet le montage des freins, aussi bien ceux de la roue avant que ceux de la roue arrière, en faisant de sorte qu'ils se trouvent tout à fait indépendants des roues, ce qui facilite l'opération de montage et de démontage des roues en permettant, de surcroît, l'emploi de roues de diamètre différent.

Le moyeu d'invention est défini par la revendication principale. Il se compose d'un corps tubulaire solidaire du cadre de la bicyclette et de l'axe perpendiculaire à ce même cadre. On monte coaxialement dans ce corps tubulaire un axe tournant bien qu'il ne lui soit guère loisible de se déplacer axialemente par rapport à ce même corps. Le moyeu est complété par deux noyaux creux à révolution accouplés entre deux noyaux qui est externe est solidaire de la roue de la bibyclette, en position coaxiale, tandis que le second, interne, peut se fixer à l'axe mentionné ci-dessus de sorte qu'il n'ait aucune possibilité de tour par rapport à ce dernier. Le moyeu dispose de moyens de fixation des noyaux entre eux et l'axe tournant.

Les caractéristiques du moyeu de l'invention, reprises dans les revendications, de même que les avantages qui en dérivent, seront mis en évidence ci-après de manière plus détaillée, à l'aide des dessins ci-joints, lesquels montrent un exemple de réalisation qui n'est guère limitatif.

Sur les dessins:
La figure 1 est une vue en perspective et en pièce détachées d'un moyeu pour bicyclettes constitué conformément à l'invention.
La figure 2 montre en perspective une variante quant à l'execution de l'axe du moyeu.
La figure 3 est une section diamètrale du moyeu en pièce détachées.
La figure 4 est une section diamètrale similaire à la figure 3, le moyeu étant monté et comprenant l'axe de la figure 2.
La figure 5 est une perpective du noyau externe du moyeu, comprenant un plateau de frein.
La figure 6 est une perspective du moyeu arrière d'une bicyclette, comprenant le noyau externe de la figure 5 et un ensemble de pignons de changement de vitesses.
La figure 7 est une perspective similaire à celle de la figure 6, montrant un moyeu doté d'un autre type de système de frein.
La figure 8 est une projection verticale de front du moyeu figurant sur le schéma 7.
La figure 9 est une perspective d'un cadre ou châssis complète d'une bicyclette selon l'invention.

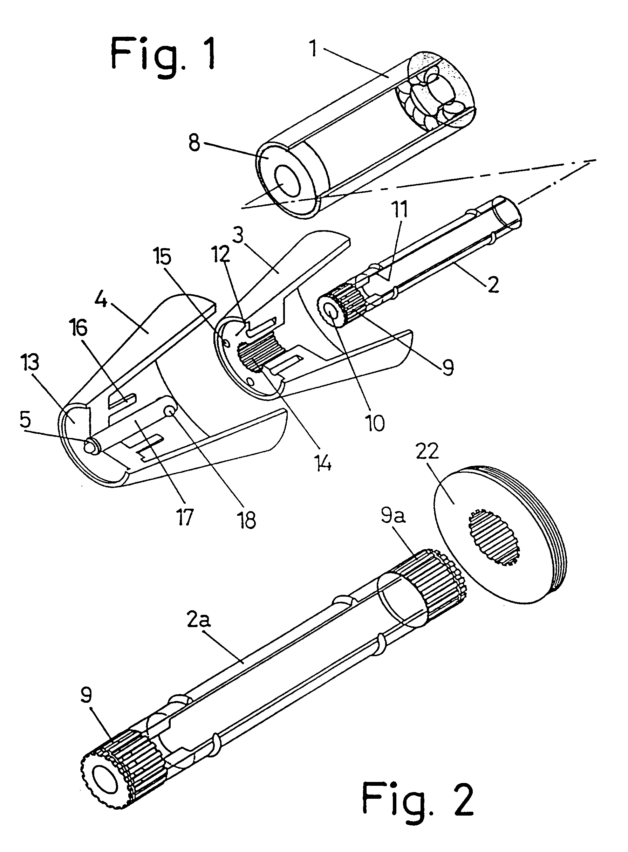

Le moyeu d'invention, ainsi qu'on peut l'apprécier aux figures 1 à 4, est constitué d'un corps tubulaire de référence portant le numéro 1, de configuration cyclindrique de préférence, d'un axe 2, également de configuration générale dans l'exemple décrit ici, par ceux noyaux creux à révolution accouplés entre eux, référenciés sous les numéros 3 et 4, de configuration tronconique dans l'exemple représenté sur les dessins, et enfin un dispositif 5 pour la fixation des deux noyaux 3 et 4 entre eux et avec l'axe 2.

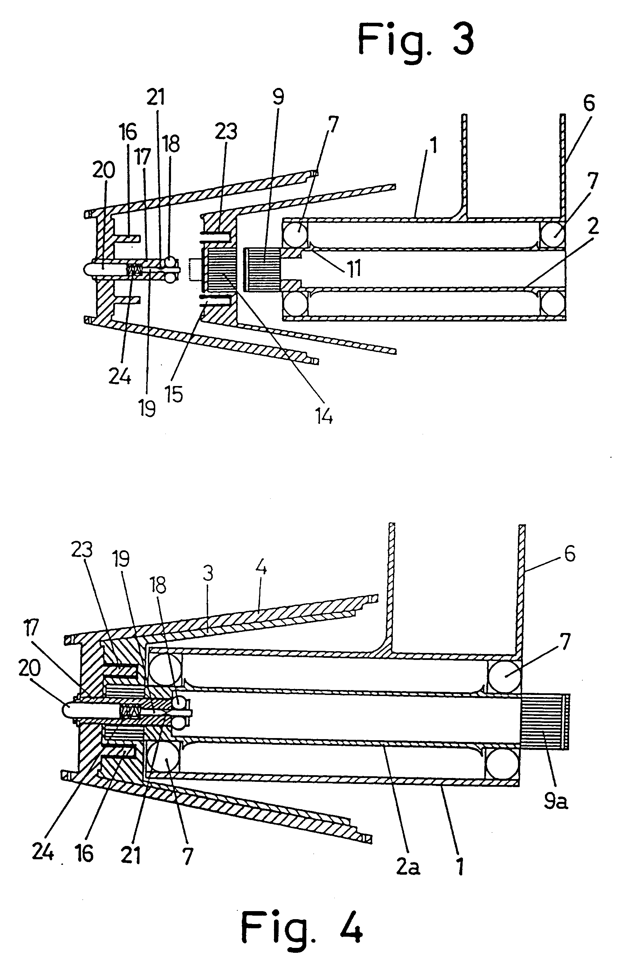

Le corps tubulaire 1, ainsi qu'on peut le voir sur les figures 3 et 4, est solidaire du cadre ou châssis 6 de la bicyclette, l'axe étant perpendiculaire un plan défini par ce même cadre. L'axe tournant 2 vient monté dans ce corps tubulaire (1) à l'aide de roulements 7 permettant à ce même axe de tourner librement, par rapport au corps 1, tout en prévenant toute capacité de déplacement axial relatif. On peut fixer aux extrémités dudit corps tubulaire 1 des cuvettes 8, par exemple à l'aide d'un écrou, pour la fixation et l'ajustement des roulements 7.

L'axe tournant 2, dans l'exemple représenté sur les figures 1 et 3, ressort par un côté du corps tubulaire sur une portion 9, qui est axialement cannelée. D'autre part l'axe 2 présente un passage axial 10, à partir de la section extrême adjacente à la portion cannelée 9, débouchant sur une portion interne 11 de section plus grande.

Dans l'exemple représenté sur les dessins l'axe tournant (2) est creux mais il pourrait être plein, en incluant le pasage 10 et la portion 11 de section plus grande. Toutefois l'axe (2) étant de structure tubulaire, c'est le poids de l'ensemble qui s'en trouve allégé.

Les noyaux 3 et 4 sont dimensionnés afin de leur permettre de s'accouplerentre eux sur le plan coaxial. Bien qu'ils soient de section tronconique dans l'exemple représenté sur les dessins, ils pourraient également adopter une configuration cylindrique. Chacun des noyaux (3,4) dispose d'une paroi de révolution, cylindrique ou conique, laquelle se trouve fermée par l'une de ses bases à l'aide d'un cloison central dont la référence est indiquées sous le numéro 12 pour le noyau du dedans (3) et sous le numéro 13 pour le noyau du dehors (4). Le cloison (12) du noyau du dedans (3) dispose d'une ouverture coaxiale 14 cannelée sur le plan axial et de contour égal à celui de la portion cannelée 9 de l'axe 2.

En outre le cloison (12) du noyau du dedans (3) présente, à partir de sa surface externe, une série de trous 15 où vont venir vis-à-vis des pivots ou saillies 16, lesquels ressortent de la surface interne du cloison 13 du noyau du dehors (4).

Enfin, le cloison 13 du noyau du dehors 4 comporte une douille 17 d'un diamètre pratiquement identique à celui du passage axial 10 de l'axe 2 et qui ressort vers l'intérieur du noyau du dehors 4 sur une portion de plus grande longueur que ce même passage 10. La paroi de la douille 17 dispose, près de sa face interne, des trous sur lesquelles sont montées les boules 18, lesquelles ressortent partiellement des surfaces interne et externe de la douille 17 et appuient sur la tige 19 du piston 20, ce dernier pouvant se déplacer partiellement dans le sens axial à l'intérieur de la douille 17. La tige 19 dispose de renfoncements 21, en forme de calotte sphérique, afin de loger partiellement les boules 18 quand elles se trouvent en position de vis-à-vis par rapport à celles-ci.

L'axe tournant 2 peut adopter la configuration représentée à la figure 2, référencié sous référence le numéro 2a. L'axe, dans ce cas, est plus long pour ressortir du corps cylindrique 1 des deux côtés en portions 9 et 9a cannelées sur le plan axial. On montera les autres composants du moyeu sur la portion 9 tandis qu'on placera une pièce 22 portant le pignon ou le jeu de pignons de la transmission sur la portion 9a.

l'axe 2 représenté à la figure 1 sera destiné à la roue avant, tandis que l'axe 2a, représenté à la figure 2, sera destiné à faire partie du moyeu de la roue arrière.

Dans la configuration comentée, ainsi qu'on peut l'apprécier sur les figures 3 et 4, on monte le noyau du dedans ou la portion cannelée 9 de l'axe 2a, une fois monté l'axe 2 ou 2a sur le corps tubulaire 1. Le noyau du dehors ou s' accouple ensuite sur le noyau interne (3), en introduisant les pivots 16 dans les trous 15 de préférence en interposant des chemises 23 de caoutchouc ou similaire qui permettront d'arriver à un ajustement parfait entre les moyeux, en évitant ainsi qu'il y ait du jeu ou des bruits. Dans le même temps, la douille 17 s'introduit à travers le passage 10 de l'axe (2). Lors de cette opération le piston 20 se déplace vers l'intérieur, de sorte que les boules 18 se logent partiellement dans les renforcements 21 de la tige 19. Dans cette position les boules 18 reculent vers l'intérieur de la douille 17, en permettant ainsi l'introduction de cette douille à travers le passage 10 de l'axe. Une fois que la portion de la douille 17 accupée par les boules 18 atteint la partie interne 11 de l'axe de plus grande section et que le piston 20 se déplace vers l'extérieur par l'action du ressort 24, les boules 18 sont projetées vers l'exterieur en occupant la position induquée à la figure 4, dans laquelle la douille 17 n'a guère la possibilité de sortir, ce qui assure ainsi le montaje et l'union des noyaux 3 et 4 sur l'axe 2.

Quand on souhaitera démontre le moyeu, il suffira de pousser vers l'intérieur le piston 20, jusqu'à ce que les renforcements 21 soient en vis-à-vis par rapport aux boules 18, de sorte que celles-ci puissent reculer partiellement vers l'intérieur en permettant l'extraction de la douille 17 et, dans le meme temps, la séparation des noyaux 3 et 4 du corps 1 et de l'axe 2.

Les noyaux 3 et 4, ainsi qu'il est indiqué, sont dimensionnés pour s'accoupler coaxialement entre eux dès lors que la paroi du noyau interne 3 du corps cylindrique 1 se trouve entourée.

Le noyau externe 4 sera solidaire de la bicyclette, à laquelle il sera fixé en position coaxiale.

Le montage et démontage des roues avec le moyeu décrit ici peut s'effectuer aisément et rapidement, puisqu'il suffit d'agir sur le piston (20), en obtenant ainsi qu'il a été expliqué la libération ou la fixation des deux noyaux 3 et 4 entre eux et l'axe 2.

Le système de moyeu décrit permet, par ailleurs, de changer les roues avant et arrière sur toutes les bicyclettes, ce qui suppose un avantage certain. Les bicyclettes munies du moyeu de l'invention permettent d'utiliser des freins qui restent intégrés à l'ensemble lorsque l'on démonte la roue, avec les avantages qui dérivent, comme le nettoyage de la roue et la possibilité de pouvoir disposer de roues de différent diamètre pour une même bicyclette, des roues par exemple pour la route et d'autres pour la montage.

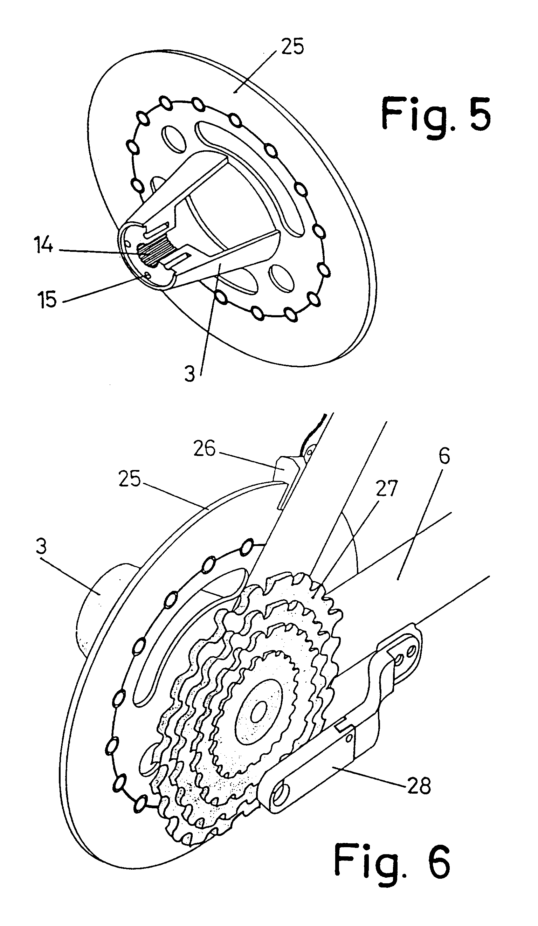

La paroi du noyau interne 3 peut se prolonger pour un plateau 25 utilisable comme disque de frein, ainsi qu'il est représenté à la figure 6, en disposant sur son bord de la pince 26 des freins. On peut voir en outre à la figure 6 comment se monte à l'extrémité 9a de l'axe un enssemble de pignons 27 pour changement de vitesses, dont on représente le support 28.

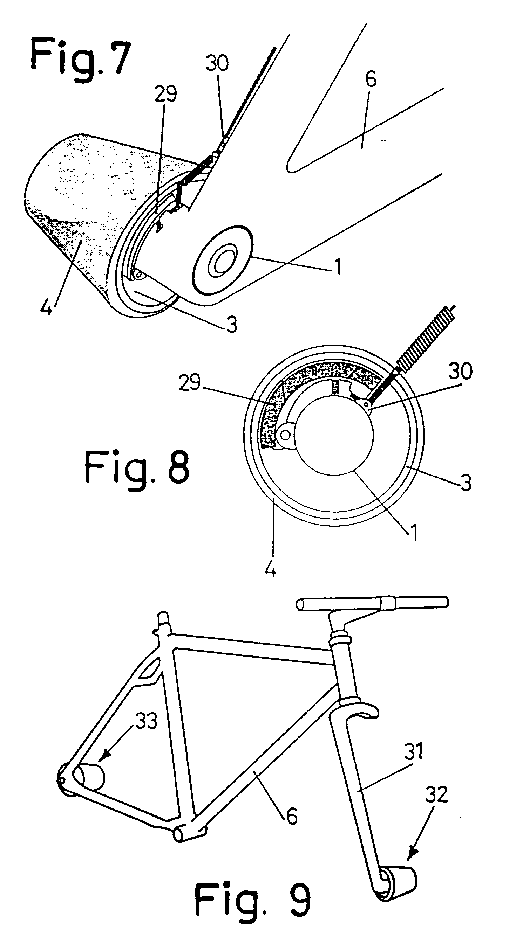

On peut disposer, comme on le montre aux figures 7 et 8, des mâchoires de frein 29 entre la paroi du noyau interne (3) et le corps cylindrique 1, actionnables à travers le mécanisme 30, lequel fait pression sur les premiers sur la surface intérieure du noyau interne (3), qui agit ainsi comme tambour de frein.

Dans tous les cas, la roue peut se démonter sans avoir à intervenir sur la chaine de transmission ni sur le système de frein, ce qui facilite le montage et le démontage de la roue, en réduisant le temps de changement de cette dernière.

Comme on peut le voir, le moyeu de l'intervention permet d'employer différents types de frein, à tambour ou à disque, ce qui supprime l'obligation de monter et de démonter la chaine chaque fois qu'il a à chager de roue arrière.

On réduit la résistance initiale à l'avance, spécialement lorsque l'on recherche une accélération instantanée ou "démarrage", grâce à un système de transmission "élastique". Dans ce genre de situations, le système de transmission traditionnel obligue à fournir un gros effort musculaire, lequel s'applique sur une résistance fixe à avancer, laquelle ne commence à diminuir que lorsque les effets de la première action musculaire importante permettent de rompre l'inertie instantanée de l'ensemble bicyclette-utilisateur.

Avec ce nouveau système de transmission, grâce à un simple mécanisme élastique, lequel peut aller situé sur l'axe de traction, on arrive à une absorption ou réduction des gros efforts musculaires instantanés qui caractérisent un brusque chagemente de rythme. La résistance initiale à avancer diminue de manière instantanée (par déformation élastique), avec l'application du premier effort musculaire, en produisant un effet mécanique similaire à celui produit lorsque l'on pousse un objet en mouvement, ayant rompu l'état d'équilibre statique. Ce comportement entraîne de gros avantages, tels que l'amélioration de l'écomomie d'effort musculaire et la réduction des tensions auxquelles se trouvent soumis les tendons.

Le moyeu d'invention permet la constitution du cadre ou châssis de la bicyclette avec la structure montrée à la figure 9, sur laquelle la fourche antérieure se réduit à un seul bras 31, à l'extrémité duquel est monté le moyeu avant 32, suivant un axe perpendiculaire à celui défini par le cadre ou châssis de la bicyclette. On monte de la même manière le moyeu postérieur 33, à l'arrière du cadre, dont les caractéristiques sont celles déjà exposées, les moyeux 32 et 33 étant orientés vers le côté opposé à celui occupé par la chaîne de transmission.

## Revendications

1. Moyeu pour roues d'une bicyclette comprenant un corps tubulaire (1) solidaire du cadre (6) de la bicyclette, à l'axe perpendiculaire à ce même cadre (6); et comprenant un axe tournant (2) monté en position coaxiale dans le corps tubulaire (1), ayant capacité de tour libre sans possibilité de déplacement axial par rapport à ce même corps (1); caractérisé par deux noyaux creux à révolution (3, 4) pouvant s'accoupler entre eux coaxialement sans possibilité de tour relatif, celui du dehors (4) solidaire de la roue de la bicyclette en position coaxiale et celui du dedans (3) pouvant se fixer à ledit axe tournant (2) sans capacité de tour par rapport à celui-ci; et par un dispositif de fixation (17 - 21, 23, 24) des noyaux creux à révolution (3, 4) entre eux et à ledit axe tournant (2).

2. Bicyclette comprenant le moyeu selon la revendication 1, les deux noyaux creux à révolution (3, 4) étant fixés entre eux et à l'axe tournant (2) par le dispositif de fixation (17 21, 23, 24) et l'axe tournant (2) étant monté en position coaxiale dans le corps tubulaire (1) solidaire du cadre (6) de la bicyclette.

3. Bicyclette selon la revendication 2, caractérisé par le fait que le corps tubulaire (1) ressort perpendiculairement par rapport au cadre (6) de la bicyclette vers le côté opposé à celui occupé par le plateau des pédales.

4. Bicyclette selon la revendication 2, caractérisé par le fait que l'axe tournant (2) est monté sur le corps tubulaire (1) à l'aide de roulements prévenant le déplacement axial relatif entre le corps tubulaire (1) et l'axe tournant (2).

5. Bicyclette selon les revendications 2 et 4, caractérisé par le fait que l'axe tournant (2) ressort du corps tubulaire (1), au moins d'un côté, sur une portion cannelée (9) axialement sur laquelle est monté le noyau du dedans (3).

6. Bicyclette selon les revendications 2 à 4, caractérisé par le fait que l'axe tournant (2) ressort du corps tubulaire (1) des deux côtés sur les duex portions axialement cannelées (9)-(9'), sur l'une desquelles, celle (9) orientée vers le côté opposé à celui occupé par la chaîne de transmission, se trouve monté le noyau du dedans (3), tandis que le pignon ou ensemble de pignons (27) de la transmission se monte sur l'autre portion (9').

7. Bicyclette selon la revendication 2, caractérisé par le fait que l'axe tournant (2) est creux, au moins partiellement, et présente à partir de la section extrême adjacente à la portion axialement cannelée (9) sur laquelle se monte le noyau du dedans (3), un passage coaxial (10), lequel débouche sur une portion interne (11) de plus grande section.

8. Moyeu pour roues de bicyclette selon la revendication 1, caractérisé par le fait que les noyaux (3) (4) sont constitués par une cloison à révolution, cylindrique ou conique fermée par la base la plus petite à l'aide d'un cloison (12) (13); le cloison (12) du noyau du dedans (3) coaxiale cylindrique axialement cannelée (14), dimensionnée pour etre montée en s'ajustant par glissement le long de la portion cannelée (9) correspondant à l'axe tournant (2) tandis que le cloison (13) du noyau du dehors (4) présente un trou coaxial traversant; les cloisons (12) (13) des deux noyaux disposant en outre par leurs surfaces de vis-à-vis, de pivots (17) et de trous (15) encastrables afin d'empecher le tour relatif entre l'un et l'autre noyau.

9. Moyeu pour roues de bicyclette selon les revendications 1 et 8, caractérisé par le fait que le dispositif de fixation des noyaux creux à revolution (3, 4) entre eux et à ledit axe tournant (2) (17 - 21, 23, 24), est constitué d'une douille cylindrique (17) qui se trouve fixée sur le trou du cloison (13) du noyau du dehors (4) et ressort par l'intérieur de ce noyau sur une portion introduite à travers le passage coaxial (10) mentionné de l'axe tournant (2), étant sa section externe à peu près égale à celle de ce même passage (10) et sa longueur plus grand, la douille disposant sur la paroi, près de l'extrémité interne, de trous sur chacun desquels vient se loger une boule (18), laquelle ressort partiellement des surfaces de cette même paroi pour se situer sur la portion interne (11) de plus grande section de ce même axe (2); ces boules (18) ayant pour caractéristique de se retirer et de s'extraire par la déplacement axial d'un piston (20) logé à l'intérieur de la douille (17).

10. Moyeu pour roues de bicyclette selon la revendication 8, caractérisé par le fait que la paroi du noyau du dedans (3) comporte fixé sur son bord libre un plateau circulaire (25), sur le bord duquel se montent les pièces des freins (26).

11. Moyeu pour roues de bicyclette selon la revendication 8, caractérisé par le fait que l'on dispose à l'interieur de la paroi du noyau du dedans (3) de mâchoires de frein (29) susceptibles d'être actionnées vers la surface interne de ce même noyau à l'aide d'un mécanisme (30) d'actionnement de frein.

## Claims

1. A hub for a bicycle wheel which comprises a tubular body (1) indivisibly part of the frame (6) of the bicycle, whose axle is perpendicular to that frame (6): and which consists of an turning axle (2) mounted in a coaxial position in the tubular body (1), capable of turning freely with no possibility of axial slipping with respect to that body (1): which is characterized by two hollow turning parts (3, 4) which can be coupled coaxially together with no possibility of relative rotation, the outer (4) being fixed to the bicycle wheel in a coaxial position, while the inner part (3) can be fixed to the turning axle (2), without being able to turn with respect to it; and by a fixing device (17, 21, 23, 24) attaching the hollow turning parts (3, 4) together and to the turning axle referred to (2).

2. A bicycle having the hub in accordance with claim 1, in which the two hollow turning parts (3, 4) are fixed together and to the turning axle (2) by the fixing device (17, 21, 23, 24) and in which the turning axle (2) is mounted in a coaxial position in the tubular body (1) forming part of the bicycle frame (6).

3. A bicycle in accordance with claim 2, a characteristic of which is that the tubular body (1) projects perpendicularly in relation to the bicycle frame (6) towards the opposite side to that occupied by the pedal plate.

4. A bicycle in accordance with claim 2, a characteristic of which is that the turning axle (2) is mounted on the tubular body (1) with the aid of bearings which avoid relative axial slip between the tubular body (1) and the turning axle (2).

5. A bicycle in accordance with claims 2 and 4, a characteristic of which is that the turning axle (2) projects from the tubular body (1) at least on one side, over an axially grooved area (9) on which the inner part (3) is mounted.

6. A bicycle in accordance with claims 2 to 4, a characteristic of which is that the turning axle (2) projects from the tubular body (1) on both sides over the two axially grooved areas (9) and (9'), on one of which, that directed (9) to the opposite side to that occupied by the driving chain, is mounted the inner part (3), while the sprocket wheel or set of sprocket wheels (27) of the drive is mounted on the other part (9').

7. A bicycle in accordance with claim 2, a characteristic of which is that the turning axle (2) is hollow, at least partially, and presents, starting from the section of the end adjacent to the axially grooved area (9) on which is mounted the inner part (3), a coaxial passage (10) which opens to an inner area (11) of greater cross-section.

8. A hub for bicycle wheels in accordance with claim 1, which is characterized by the parts (3) and (4) having a turning partition, cylindrical or conical, closed at the smaller end by a closure (12) (13); in which the coaxial, cylindrical, axially grooved (14) partition (12) of the inner part (3) has suitable dimensions for mounting, by means of a slip fit, along the length of the grooved area (9) which corresponds to the turning axle (2), while the partition (13) of the outer part (4) presents a coaxial orifice which goes through it; in which the partitions (12) (13) of the two parts have, also, on the opposite surfaces, pivots (17) and holes (15) which fit together so as to prevent any turning of the one relative to the other.

9. A hub for bicycle wheels in accordance with claims 1 and 8, which is characterized by the device fixing the hollow turning parts (3, 4) together and to the said turning axle (2) (17, 21, 23, 24), being made up of a cylindrical cotter pin (17) which is fixed to the orifice of the partition (13) of the outer part (4) and projects into the interior of this outer part on a piece introduced through the above mentioned coaxial passage (10) of the turning axle (2), its outer cross-section being approximately equal to that of the passage (10) and longer, the cotter pin on the wall having, close to the inner end, holes in each of which is lodged a ball (18), which projects partially from the surface of this wall, so as to be located in the inner area (11) of the larger section of the axle (2); the characteristic of these balls (18) being their withdrawal and extraction through the actual axial displacement of a piston (20) lodged within the cotter pin (17).

10. A hub for bicycle wheels in accordance with claim 8, which is characterized by the wall of the inner part (3) having, fixed on its free flange, a circular plate (25) on the edge of which the brake parts are mounted (26).

11. A hub for bicycle wheels in accordance with claim 8, which is characterized by having in the interior of the wall of the inner part (3) brake shoes (29) able to be directed towards the interior surface of this inner part by means of a mechanism (30) which operates the brake.

## Patentansprüche

1. Radnabe für ein Fahrrad, bestehend aus einem am Fahrradrahmen (6) befestigten Rohrkörper (1), dessen Achse senkrecht zu diesem Rahmen (6) steht und der aus einer koaxial am Rohrkörper (1) montierten Drehachse (2) besteht, die sich frei und ohne Axialverschiebung zu diesem Rahmen (1) drehen kann, gekennzeichnet durch zwei drehbare Hohlkerne (3, 4), die sich koaxial und ohne Drehmöglichkeit untereinander drehen lassen, wobei der äussere Kern (4) in koaxial mit dem Rad verbunden ist, während sich der Innenkern (3) an dieser Drehachse (2) ohne Drehmöglichkeit zu diesem Kern befestigen läßt, sowie aus einer Befestigungsvorrichtung (17, 21, 23, 24) für die Drehkerne (3, 4) untereinander und an der genannten Drehachse (2).

2. Fahrrad mit einer Habe gemäß Anspruch 1, bei dem die beiden Drehkerne (3, 4) untereinander und an der Drehachse (2) mit Hilfe der Befestigungsvorrichtung (17, 21, 23, 24) befestigt sind und bei dem die Drehachse (2) koaxial am Rohrkörper (1) und mit dem Fahrradrahmen (6) verbunden ist.

3. Fahrrad gemäß Anspruch 2, dadurch gekennzeichnet, daß der Rohrkörper (1) senkrecht zum Rahrradrahmen (6) zu der dem Pedalkettenrad entgegengesetzten Seite hin herausragt.

4. Fahrrad gemäß Anspruch 2, dadurch gekennzeichnet, daß die Drehachse (2) auf dem Rohrkörper (1) mit Hilfe von Wälzlagern montiert ist, die die axiale Verschiebung zur Rohrkörper (1) und die Drehachse (2) unterbinden.

5. Fahrrad gemäß Anspruch 2 und 4, dadurch gekennzeichnet, daß die Drehachse (2) aus dem Rohrkörper (1) nach mindestens einer Seite über einen axial geriffelten Bereich (9) herausragt, in dem der Innenkern (3) montiert ist.

6. Fahrrad gemäß Anspruch 2 bis 4, dadurch gekennzeichnet, daß die Drehachse (2) aus dem Rohekörper (1) nach beiden Seiten über die beiden geriffelten Bereiche (9) - (9') axial herausragt, wobei in einem der Bereiche, nämlich dem (9) in entgegengesetzter Richtung zur Antriebskette liegenden, der Innenkern (3) montiert ist, während das Antriebsritzel oder die Antriebsritzelvorrichtung (27) im anderen Bereich (9') montiert ist.

7. Fahrrad gemäß Anspruch 2, dadurch gekennzeichnet, daß die Drehachse (2), wenigstens teilweise, hohl ist und ab dem Teilabschnitt des an den axial geriffelten Bereich (9) grenzenden Endes, in dem der Innenkern (3) montiert ist, eine koaxialen Durchführung (19) aufweist, der in einen Innenbereich (11) mit größerem Querschnitt mündet.

8. Radnabe für ein Fahrrad gemäß Anspruch 1, dadurch gekennzeichnet, daß die Kerne (3) (4) aus einer zylindrischen oder kegeligen Drehwand bestehen, die an der kleineren Grundfläche von einer Wand (12) (13) abgeschlossen wird, wobei die Wand (12) des koaxial zylindrischen und axial geriffelten (14) Innenkerns (3) Abmessungen aufweist, die für die Montage, bei Einstellung der Verschiebung über den geriffelten, der Drehachse (2) entsprechenden Bereich (9), geeignet ist, während die Wand (13) des Außenkerns (4) eine durchgehende koaxiale Bohrung aufweist. Die beiden Wände (12) (13) der beiden Kerne weisen außerdem auf den einander gegenüberliegenden Flächen Zapfen (17) und Bohrungen (15) auf, die ineinandergreifen, um die relative Drehung zwischen dem einen und dem anderen Kern unterbinden.

9. Radnabe für ein Fahrrad gemäß den Ansprüchen 1 und 8, dadurch gekennzeichnet, daß die Befestigungsvorrichtung der hohlen, untereinander und zu der genannten Drehachse (2) (17 - 21, 23, 24) drehbaren Kerne (3, 4) aus einem Rundkeil (17) besteht, der in der Bohrung der Wand (13) des Außenkerns (4) befestigt ist und nach innen aus diesem Kern an der erwähnten koaxialen Durchführung (10) der Drehachse (2) herausragt, wobei deren Außenquerschnitt in etwa dem dieser Durchführung (10) entspricht und eine größere Länge aufweist. Der Keil verfügt in der Wand, nahe dem inneren Ende, über Bohrungen zur Aufnahme einer Kugel (18), die teilweise aus den Flächen dieser Wand herausragt und sich im Innenbereich (11) dieser Achse mit größerem Querschnitt zu positioniert. Kennzeichnend für diese Kugel (18) ist, daß sie durch Axialverschiebung eines im Innern des Heils (17) befindlichen Kolbens (20) zurück- und herausgeschoben wird.

10. Radnabe für ein Fahrrad gemäß Anspruch 8, dadurch gekennzeichnet, daß am freien Rand der Wand des Innenkerns (3) eine Rundscheibe (25) befestigt ist, an deren Rand die Bremsteile (26) angebracht sind.

11. Radnabe für ein Fahrrad gemäß Anspruch 8, dadurch gekennzeichnet, daß innen an der Wand des Innenkerns (3) Bremsschuhe (29) angebracht sind, die zur Innenfläche eben dieses Kerns hin mit Hilfe einer Bremsantriebsvorrichtung (30) betätigt werden können.
